# FASCICULE DE BREVET EUROPEEN

(11) **EP 3 888 106 B1**
(45) Date de publication et mention de la délivrance du brevet: **25.01.2023**
(21) Numéro de dépôt: 19801919.2
(22) Date de dépôt: 19.11.2019
(51) Int. Cl.: H01F 27/38, H01F 27/40, H02M 3/337

(54) **ENSEMBLE ÉLECTROMAGNÉTIQUE POUR CONVERTISSEUR RÉSONANT**
ELEKTROMAGNETISCHE STRUKTUR FÜR RESONANZWANDLER
ELECTROMAGNETIC STRUCTURE FOR RESONANT CONVERTER

(30) Priorité: 29.11.2018 FR 1872034
(43) Date de publication de la demande: 06.10.2021
(73) Titulaire: Renault s.a.s, 92100 Boulogne Billancourt (FR)
(72) Inventeur: GASCHER, Alain, 92310 Sevres (FR)
(74) Mandataire: Renault Group
(86) Numéro de dépôt international: PCT/EP2019/081804
(87) Numéro de publication internationale: WO 2020/109083

(56) Documents cités:
- WO-A1-2017/081971
- US-A1- 2009 237 195
- US-A1- 2012 140 525

## Description

La présente invention se rapporte de manière générale au domaine de l'électrotechnique et concerne plus précisément un ensemble électromagnétique pour convertisseur courant continu - courant continu dans un chargeur de véhicule électrique ou hybride.

Les chargeurs de véhicule électrique ou hybride comportent généralement deux étages de conversion, un premier étage redresseur correcteur de puissance, et un deuxième étage de conversion courant continu - courant continu, destiné à adapter la tension redressée par le premier étage à la tension batterie. Ce deuxième étage de conversion comporte avantageusement un transformateur d'isolation galvanique dont l'une des fonctions est d'assurer la sécurité électrique des utilisateurs lors de la charge de la batterie de traction d'un tel véhicule. Un tel convertisseur peut être par exemple trouvé dans le document US 2012/140525.

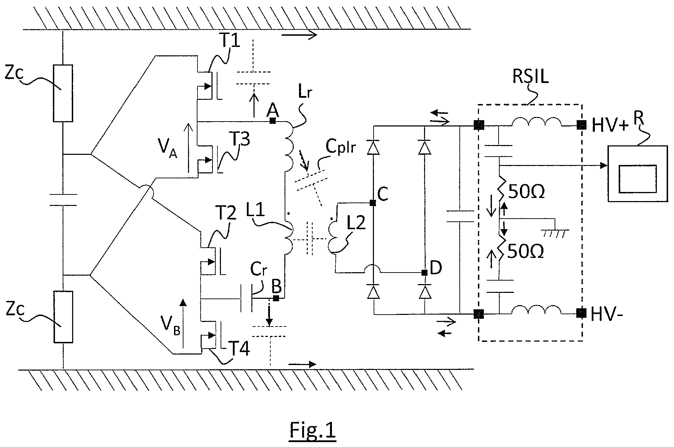

Lorsque ce deuxième étage de conversion est un convertisseur résonant de type LLC, comme représenté sur la **figure 1****,** on constate l'apparition de courants de mode commun lors du fonctionnement du chargeur, qui ne permettent pas de répondre aux exigences de compatibilité électromagnétique fixées par la norme.

Notamment, ce convertisseur résonant comporte un pont de transistors T1, T2, T3 et T4, connecté en entrée à un bus continu, dont les bornes présentent chacune une impédance Zc par rapport au châssis du véhicule dans lequel est embarqué le chargeur. Le pont de transistors est connecté en sortie à une structure LLC comportant connectés en série, une inductance série Lr, le bobinage primaire L1 d'un transformateur et une capacité Cr. Le bobinage secondaire L2 du transformateur est connecté à l'entrée d'un pont de diodes, lui-même connecté en sortie à une capacité de lissage et aux bornes HV+ et HV- d'une batterie d'accumulateurs du véhicule. Lors des mesures de performance en compatibilité électromagnétique, on introduit un réseau stabilisateur d'impédance de ligne RSIL entre la capacité de lissage et la batterie, et un récepteur R qui permettent de placer le chargeur dans un environnement électrique connu et de réaliser la mesure.

En fonctionnement, la tension V_{A} aux bornes du transistor T3 alterne entre 0V et la valeur V_{DC} du bus continu, la tension V_{B} aux bornes du transistor T4 alterne également entre 0V et V_{DC}, V_{B} étant alors l'opposé de la tension V_{A}. Cette alternance permet le passage d'un courant alternatif dans le bobinage primaire L1 du transformateur du convertisseur.

Lorsque la tension V_{B} aux bornes du transistor T4 passe de 0V à la valeur V_{DC}, on constate l'apparition de courants de mode commun représentés en flèches à pointes fermées pleines, passant notamment dans une capacité parasite de mode commun entre d'une part le point B de connexion entre la capacité Cr et le bobinage primaire L1 du transformateur, et le châssis d'autre part.

Lorsque la tension V_{A} aux bornes du transistor T3 passe de 0V à la valeur V_{DC}, on constate l'apparition de courants de mode commun représentés en flèches à pointes non fermées, passant notamment
- dans une capacité parasite de mode commun entre d'une part le point A de connexion entre le drain du transistor T3 et l'inductance série Lr, et le châssis d'autre part,
- mais aussi dans une capacité parasite Cplr entre l'inductance série Lr et le bobinage secondaire L2 du transformateur.

Les courants de mode commun ainsi générés d'une part lorsque la tension V_{B} aux bornes du transistor T4 passe de 0V à la valeur V_{DC}, et d'autre part lorsque la tension V_{A} aux bornes du transistor T3 passe de 0V à la valeur V_{DC}, ne se compensent pas. Ainsi lorsqu'on place un récepteur R aux bornes d'une des résistances de 50Ω du réseau RSIL, cette résistance étant reliée à la masse du véhicule, le récepteur R étant ici un instrument de mesure pour vérifier la tenue des normes en compatibilité électromagnétique, on mesure une émission de courant de mode commun supérieure au seuil autorisé.

On connaît deux méthodes principales pour diminuer les émissions de courant de mode commun dans les alimentations à découpage. La première méthode est l'élimination à la source du courant de mode commun, en éliminant les capacités parasites, la deuxième méthode est le filtrage de ce courant. Selon cette deuxième méthode, il est courant dans le cas d'un convertisseur résonant de type LLC, de symétriser l'inductance série Lr. Pour cela, une solution peu coûteuse est d'utiliser l'inductance de fuite du transformateur comme inductance série, cependant cela est valable surtout pour les convertisseurs de faible puissance. Une autre solution décrite dans le document EP2299456, consiste à intégrer l'inductance série de manière symétrique magnétiquement et géométriquement dans le convertisseur, mais cette solution est coûteuse et encombrante.

Un des buts de l'invention est de remédier à au moins une partie des inconvénients de la technique antérieure en fournissant un ensemble électromagnétique pour convertisseur résonant de type LLC, qui élimine les courants de mode commun tout en étant compact, peu coûteux et utilisable sur les convertisseurs à forte puissance.

A cette fin, l'invention propose un ensemble électromagnétique pour convertisseur résonant de type LLC, comportant une structure en ferrite, ladite structure en ferrite comportant :
- un premier compartiment logeant un transformateur monophasé, ledit transformateur monophasé comportant un bobinage secondaire bobiné autour d'un premier noyau magnétique et un bobinage primaire bobiné autour dudit bobinage secondaire,
- un deuxième compartiment logeant l'inductance série dudit convertisseur résonant de type LLC, l'inductance série comportant un bobinage bobiné autour d'un deuxième noyau magnétique,
ledit ensemble électromagnétique étant caractérisé en ce que ledit bobinage de ladite inductance série comporte un premier enroulement bobiné autour dudit deuxième noyau magnétique et connecté électriquement à une borne dudit bobinage primaire, l'autre borne dudit bobinage primaire étant connectée électriquement à un deuxième enroulement de ladite inductance série, ledit deuxième enroulement étant bobiné autour dudit premier enroulement, les bornes de l'ensemble inductance série et bobinage primaire étant formées par une borne dudit premier enroulement et une borne dudit deuxième enroulement.

Grâce à l'invention, l'inductance série Lr est partagée en deux enroulements disposés électriquement de manière symétrique au bobinage primaire L1 du transformateur, ce qui permet d'éliminer les courants de mode commun. Cette symétrisation a de plus l'avantage de présenter un faible encombrement et également de réutiliser une structure en ferrite existante d'un convertisseur résonant LLC pour implémenter l'invention. La structure étant compacte elle est aussi peu coûteuse en matériau.

De préférence, ledit premier enroulement et ledit deuxième enroulement ont le même nombre de spires de manière à symétriser encore la structure résonante du convertisseur.

L'invention concerne aussi un convertisseur résonant de type LLC, caractérisé en ce que la structure LLC dudit convertisseur comporte une première capacité connectée en série à l'entrée d'un ensemble électromagnétique selon l'invention, la sortie dudit ensemble électromagnétique étant connectée à une deuxième capacité de même valeur. Ce convertisseur présente les mêmes avantages que l'ensemble électromagnétique selon l'invention et permet de limiter encore les courants de mode commun en symétrisant également la capacité de la structure résonante du convertisseur.

L'invention concerne enfin un chargeur pour véhicule automobile électrique ou hybride, comportant un convertisseur résonant selon l'invention, dans lequel ledit convertisseur comporte un pont de transistors connecté en entrée à un bus continu et en sortie à ladite structure LLC, le bobinage secondaire du transformateur de ladite structure LLC étant connecté à un étage redresseur, les deux bornes dudit bus continu présentant avec le châssis dudit véhicule une impédance de même valeur. Ce chargeur présente les mêmes avantages que le convertisseur selon l'invention tout en limitant encore les courants de fuite par la symétrisation des impédances du bus continu par rapport au châssis.

D'autres caractéristiques et avantages apparaîtront à la lecture d'un mode de réalisation préféré décrit en référence aux figures dans lesquelles :
- la figure 1, déjà décrite en relation avec l'art antérieur, représente un convertisseur résonant de type LLC existant,
- la figure 2 représente un ensemble électromagnétique optimisé pour le convertisseur résonant de type LLC de la figure 1,
- la figure 3 représente un ensemble électromagnétique selon l'invention, dans ce mode préféré de réalisation de l'invention,
- et la figure 4 représente un convertisseur résonant de type LLC selon l'invention, dans ce mode préféré de réalisation de l'invention.

Dans la présente demande, pour simplifier, les éléments identiques se retrouvant sur des modes de réalisation différents, ou simplement sur des figures différentes, sont repérés par les mêmes signes de référence.

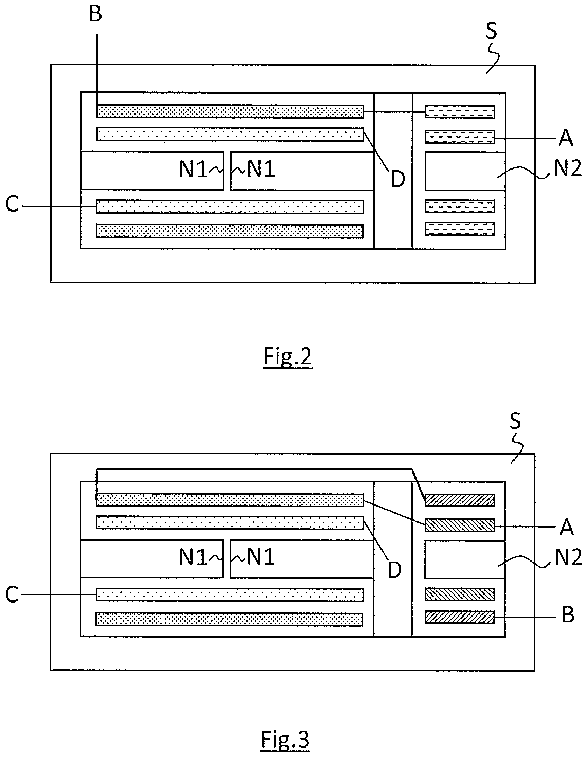

Selon un mode préféré de réalisation de l'invention représenté à la **figure 3****,** on réutilise une structure S en ferrite d'un ensemble électromagnétique optimisé pour un convertisseur résonant de type LLC selon l'art antérieur, tel que représenté à la **figure 2****.**

En référence à la **figure 2****,** il est possible de réaliser l'ensemble électromagnétique de la **figure 1** d'art antérieur de la façon suivante :
- on réalise d'abord le bobinage secondaire L2 du transformateur autour d'un premier noyau central N1 de la structure en ferrite S, les bornes d'entrée et sortie de ce bobinage secondaire L2 correspondant aux points de connexion C et D ;
- on réalise ensuite le bobinage primaire L1 du transformateur autour du bobinage secondaire L2; la borne d'entrée du bobinage primaire correspond au point de connexion B ;
- le fil de sortie du bobinage primaire L1 est utilisé pour réaliser le bobinage de l'inductance série Lr autour d'un deuxième noyau N2 central de la structure en ferrite S ; la borne de sortie de l'inductance série Lr correspond au point de connexion A.

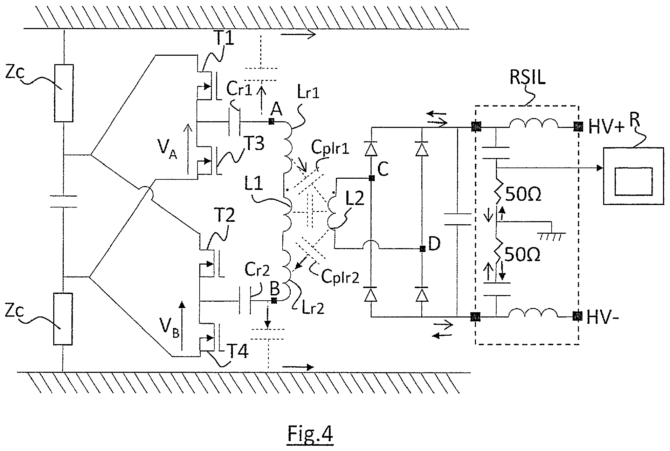

En référence à la **figure 3****,** selon l'invention, la structure en ferrite S est réutilisée différemment :
- on réalise d'abord le bobinage secondaire L2 du transformateur autour du premier noyau central N1 de la structure en ferrite S, les bornes d'entrée et sortie de ce bobinage secondaire L2 correspondant aux points de connexion C et D de la **figure 4****;**
- on réalise ensuite le bobinage d'un premier enroulement Lr1 de l'inductance série autour du deuxième noyau magnétique N2 ; l'une des bornes de ce premier enroulement Lr1 correspond au point de connexion A sur la **figure 4****,**
- on utilise le fil du premier enroulement Lr1 à l'opposé du point de connexion A pour réaliser le bobinage primaire L1 du transformateur, autour du bobinage secondaire L2 du transformateur, puis le fil restant est utilisé pour réaliser un deuxième enroulement Lr2 de l'inductance série, autour du premier enroulement Lr1 de l'inductance série. La borne de sortie du deuxième enroulement Lr2 à l'opposé de sa connexion avec le bobinage primaire L1 correspond au point de connexion B.

Les premier et deuxième enroulements Lr1 et Lr2 sont de préférence réalisés avec le même nombre de spires de fil, de manière à ce qu'ils présentent des inductances de même valeur. Le fil utilisé pour ces bobinages et enroulements est de préférence en cuivre.

Le schéma électrique correspondant à cet ensemble électromagnétique selon la **figure** 3 est représenté sur la **figure** 4. Le premier enroulement Lr1 présente une capacité parasite Cplr1 avec le bobinage secondaire L2 du transformateur, et le deuxième enroulement Lr2 présente une capacité parasite Cplr2 de même valeur avec le bobinage secondaire L2 du transformateur.

Ainsi, lorsque la tension V_{B} aux bornes du transistor T4 passe de 0V à la valeur V_{DC}, on constate l'apparition de courants de mode commun représentés en flèches à pointes fermées pleines, passant notamment dans la capacité parasite Cplr2 d'une part, et entre le point B et le châssis d'autre part.

Lorsque la tension V_{A} aux bornes du transistor T3 passe de 0V à la valeur V_{DC}, on constate l'apparition de courants de mode commun représentés en flèches à pointes non fermées, passant notamment
- dans la capacité parasite de mode commun entre le point A et le châssis d'une part,
- dans la capacité parasite Cplr1 d'autre part.

Les courants de mode commun générés dans ces deux cas se compensent donc beaucoup plus, par la symétrisation de l'inductance série, bien qu'elle soit réalisée de manière très compacte et non symétrique géométriquement.

Afin de symétriser encore le convertisseur résonant de type LLC selon l'invention, la capacité de la structure résonante est réalisée par deux capacités Cr1 et Cr2 de même valeur, la capacité Cr1 étant connectée au point A d'une part et d'autre part à la source du transistor T1, la capacité Cr2 étant connectée d'une part au point de connexion B et d'autre part à la source du transistor T2. Ainsi les courants de mode commun générés lorsque la tension V_{A} passe de 0V à la valeur V_{DC} d'une part, et lorsque la tension V_{B} passe de 0V à V_{DC} d'autre part, s'annulent.

Bien entendu d'autres modes de réalisation de l'invention sont envisageables, notamment d'autres matériaux magnétiques que la ferrite ou le cuivre, ayant des propriétés semblables, sont utilisables dans l'ensemble électromagnétique selon l'invention. De plus des variantes de réalisation sont possibles, par exemple différentes formes de conducteurs sont utilisables pour les spires des bobinages, ou dans une autre variante le pont de diodes du convertisseur est remplacé par une structure réversible.

## Revendications

1. Ensemble électromagnétique pour convertisseur résonant de type LLC, comportant une structure (S) en ferrite, ladite structure (S) en ferrite comportant
- un premier compartiment logeant un transformateur monophasé, ledit transformateur monophasé comportant un bobinage secondaire (L2) bobiné autour d'un premier noyau magnétique (N1) et un bobinage primaire (L1) bobiné autour dudit bobinage secondaire (L2),
- un deuxième compartiment logeant l'inductance série dudit convertisseur résonant de type LLC, l'inductance série comportant un bobinage bobiné autour d'un deuxième noyau magnétique (N2),
ledit ensemble électromagnétique étant **caractérisé en ce que** ledit bobinage de ladite inductance série comporte un premier enroulement (Lr1) bobiné autour dudit deuxième noyau magnétique (N2) et connecté électriquement à une borne dudit bobinage primaire (L1), l'autre borne dudit bobinage primaire (L1) étant connectée électriquement à un deuxième enroulement (Lr2) de ladite inductance série, ledit deuxième enroulement (Lr2) étant bobiné autour dudit premier enroulement (Lr1), les bornes de l'ensemble inductance série et bobinage primaire (L1) étant formées par une borne dudit premier enroulement (Lr1) et une borne dudit deuxième enroulement (Lr2).

2. Ensemble électromagnétique selon la revendication 1, **caractérisé en ce que** ledit premier enroulement (Lr1) et ledit deuxième enroulement (Lr2) ont le même nombre de spires.

3. Convertisseur résonant de type LLC, **caractérisé en ce que** la structure LLC dudit convertisseur comporte une première capacité (Cr1) connectée en série à l'entrée d'un ensemble électromagnétique selon la revendication 1 ou 2, la sortie dudit ensemble électromagnétique étant connectée à une deuxième capacité (Cr2) de même valeur.

4. Chargeur pour véhicule automobile électrique ou hybride, comportant un convertisseur résonant selon la revendication 2, dans lequel ledit convertisseur comporte un pont de transistors connecté en entrée à un bus continu et en sortie à ladite structure LLC, le bobinage secondaire (L2) du transformateur de ladite structure LLC étant connecté à un étage redresseur, les deux bornes dudit bus continu présentant avec le châssis dudit véhicule une impédance (Zc) de même valeur.

## Patentansprüche

1. Elektromagnetische Einheit für einen Resonanzwandler vom LLC-Typ, die eine Ferritstruktur (S) aufweist, wobei die Ferritstruktur (S) aufweist:
- ein erstes Abteil, in dem ein einphasiger Transformator untergebracht ist, wobei der einphasige Transformator eine Sekundärspule (L2), die um einen ersten Magnetkern (N1) gewickelt ist, und eine Primärspule (L1) aufweist, die um die Sekundärspule (L2) gewickelt ist,
- ein zweites Abteil, in dem die Reiheninduktivität des Resonanzwandlers vom LLC-Typ untergebracht ist, wobei die Reiheninduktivität eine um einen zweiten Magnetkern (N2) gewickelte Spule aufweist,
wobei die elektromagnetische Einheit **dadurch gekennzeichnet ist, dass** die Spule der Reiheninduktivität eine erste Wicklung (Lr1) aufweist, die um den zweiten Magnetkern (N2) gewickelt und elektrisch mit einer Klemme der Primärspule (L1) verbunden ist, wobei die andere Klemme der Primärspule (L1) elektrisch mit einer zweiten Wicklung (Lr2) der Reiheninduktivität verbunden ist, wobei die zweite Wicklung (Lr2) um die erste Wicklung (Lr1) gewickelt ist, wobei die Klemmen der Einheit aus Reiheninduktivität und Primärspule (L1) von einer Klemme der ersten Wicklung (Lr1) und einer Klemme der zweiten Wicklung (Lr2) gebildet werden.

2. Elektromagnetische Einheit nach Anspruch 1, **dadurch gekennzeichnet, dass** die erste Wicklung (Lr1) und die zweite Wicklung (Lr2) die gleiche Anzahl von Windungen haben.

3. Resonanzwandler vom LLC-Typ, **dadurch gekennzeichnet, dass** die LLC-Struktur des Wandlers eine erste Kapazität (Cr1) in Reihe geschaltet mit dem Eingang einer elektromagnetischen Einheit nach Anspruch 1 oder 2 aufweist, wobei der Ausgang der elektromagnetischen Einheit mit einer zweiten Kapazität (Cr2) gleichen Werts verbunden ist.

4. Ladegerät für ein Elektro- oder Hybrid-Kraftfahrzeug, das einen Resonanzwandler nach Anspruch 2 aufweist, wobei der Wandler eine Transistorenbrücke aufweist, die am Eingang mit einem Gleichstrombus und am Ausgang mit der LLC-Struktur verbunden ist, wobei die Sekundärspule (L2) des Transformators der LLC-Struktur mit einer Gleichrichterstufe verbunden ist, wobei die zwei Klemmen des Gleichstrombusses mit dem Fahrgestell des Fahrzeugs eine Impedanz (Zc) gleichen Werts aufweisen.

## Claims

1. Electromagnetic assembly for an LLC resonant converter, comprising a ferrite structure (S), said ferrite structure (S) comprising:
- a first compartment housing a single-phase transformer, said single-phase transformer comprising a secondary winding (L2) wound around a first magnetic core (N1) and a primary winding (L1) wound around said secondary winding (L2),
- a second compartment housing the series inductance of said LLC resonant converter, the series inductance comprising a winding wound around a second magnetic core (N2),
said electromagnetic assembly being **characterized in that** said winding of said series inductance comprises a first coil (Lr1) wound around said second magnetic core (N2) and connected electrically to a terminal of said primary winding (L1), the other terminal of said primary winding (L1) being connected electrically to a second coil (Lr2) of said series inductance, said second coil (Lr2) being wound around said first coil (Lr1), the terminals of the series inductance and primary winding (L1) assembly being formed by a terminal of said first coil (Lr1) and a terminal of said second coil (Lr2).

2. Electromagnetic assembly according to Claim 1, **characterized in that** said first coil (Lr1) and said second coil (Lr2) have the same number of turns.

3. LLC resonant converter, **characterized in that** the LLC structure of said converter comprises a first capacitor (Cr1) connected in series with the input of an electromagnetic assembly according to Claim 1 or 2, the output of said electromagnetic assembly being connected to a second capacitor (Cr2) of the same value.

4. Charger for an electric or hybrid motor vehicle, comprising a resonant converter according to Claim 2, wherein said converter comprises a transistor bridge connected at input to a DC bus and at output to said LLC structure, the secondary winding (L2) of the transformer of said LLC structure being connected to a rectifier stage, the two terminals of said DC bus having, with the chassis of said vehicle, an impedance (Zc) of the same value.
